(19) Europäisches Patentamt
European Patent Office
Office européen des brevets

(11) EP 4 442 724 A1

(12) **EUROPEAN PATENT APPLICATION**

(43) Date of publication:
**09.10.2024 Bulletin 2024/41**

(21) Application number: **23305487.3**

(22) Date of filing: **04.04.2023**

(51) International Patent Classification (IPC):
***C08G 18/10** (2006.01)* ***C08G 18/22** (2006.01)*
***C08G 18/38** (2006.01)* ***C08G 18/76** (2006.01)*
***C08G 18/80** (2006.01)*

(52) Cooperative Patent Classification (CPC):
(C-Sets available)
**C08G 18/3876; C08G 18/10; C08G 18/225; C08G 18/7642; C08G 18/8054** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
- **FROMENTIN, Pierre**
  **10240 Bangkok (TH)**
- **YUKTANAN, Pimchaya**
  **10310 Bangkok (TH)**

(74) Representative: **Jacobacci Coralis Harle**
**32, rue de l'Arcade**
**75008 Paris (FR)**

(54) **METHOD OF CURING A POLYTHIOURETHANE-BASED SUBSTRATE FROM A PRE-POLYMER**

(57) The invention relates to a method of curing a polythiourethane-based transparent casted substrate, comprising the steps of providing a first component A comprising a polythiourethane pre-polymer having iso(thio)cyanate end groups, said pre-polymer having been prepared from at least one polythiol monomer and at least one polyiso(thio)cyanate monomer, used in amounts adapted so that the molar ratio R2 of NCX/SH groups ranges from 2 to 35, providing a second component B comprising at least one polythiol monomer, mixing together first and second components A and B and filling a molding cavity with the resulting polymerizable mixture, curing said polymerizable mixture to obtain a polythiourethane-based transparent substrate, wherein said pre-polymer has been prepared by mixing said at least one polyiso(thio)cyanate monomer and said at least one polythiol monomer in initial amounts such that the initial molar ratio R1 of NCX/SH groups for said monomers ranges from 0.3 R2 to 0.95 R2, polymerizing the mixture, and adding to the mixture an additional amount of at least one polyiso(thio)cyanate monomer such that the molar ratio of NCX/SH groups for all the monomers used in the preparation of said pre-polymer is equal to R2, X being O or S.

EP 4 442 724 A1

(52) Cooperative Patent Classification (CPC): (Cont.)

C-Sets
**C08G 18/10, C08G 18/3876**

## Description

The present invention relates to a process for manufacturing polythiourethane-based substrates, and in particular optical substrates such as ophthalmic lenses, having generally a middle or high refractive index, preferably of at least 1.52, more preferably of at least 1.54, more preferably of at least 1.6 and even more preferably of at least 1.67, within short curing cycles.

BACKGROUND AND SUMMARY OF THE INVENTION

Ophthalmic lenses made of polythiourethane-based substrates are typically prepared by a process comprising mixing appropriate monomers in a tank, such as a mixture of a polyisocyanate and a polythiol, adding catalyst and additive, filling a molding cavity with this liquid mixture of monomers, polymerizing the monomer mixture and thereafter recovering the polymerized polythiourethane-based substrate from the mold. The mixture is then subjected to a thermal cycle in an oven, for a typical duration of 20 hours.

The application WO 00/26272 discloses a polymerizable composition for making a poly(thio)urethane resin comprising at least one polyiso(thio)cyanate monomer, at least one polythiol monomer and a salt catalyst system, typically a mixture of KSCN and a crown ether.

A fast cure process is highly desirable over usual process as the shorter residence time in curing oven enables a dramatic productivity gain, complex and demanding lens geometries can be obtained in better yield as the final polymerizable mixture shrinkage is lower than that of mixture obtained directly from monomers, compatibility with the adhesive of the tape used for mold assembly is better, and energy consumption during polymerization cycles is reduced.

It is known to reduce the time required to cure the polymerizable composition poured into mold assemblies by at least partially replacing monomers with pre-polymers (or oligomers). The monomers are first pre-reacted to form oligomers (pre-polymers), then blended with a catalyst that provides a high overall reactivity in very small volume or even through in-line mixing equipment, then poured into mold assemblies that are subjected to a short polymerization cycle, typically few hours.

In this regard, US 2003/125410 discloses a method of fast curing polythiourethane transparent casted substrate, which comprises the steps of:

1) Providing a first component A comprising a polythiourethane pre-polymer having isocyanate or isothiocyanate end groups,
2) Providing a second component B comprising a polythiourethane pre-polymer having thiol end groups,
3) Mixing together first and second components A and B and filling a molding cavity of a casting mold assembly with the resulting mixture,
4) Curing said mixture to obtain a transparent solid substrate, in the presence of 0.001 to 2.5% by weight, based on the total weight of the polymerizable monomers, of a highly reactive catalyst to dramatically shorten the curing time of the polymerizable composition within typically 2 hours.

US 2007/098999 discloses a similar process involving two pre-polymers.

Provided that the viscosity is controlled, batch mixing of such mixtures is inherently safer than usual process from monomers, as part of the available bond forming energy has already been released during the oligomers formation (pre-polymerization), which limits formation of local heat points in the final polymerizable mixture. The use of pre-polymers allows stable and steady reaction.

In applications WO 2021/182526, EP 3916470 and EP 3919967, a different approach for fast curing a polythiourethane optical material has been chosen, combining the use of monomers and pre-polymers in the presence of a polymerization catalyst.

Pre-polymers are obtained from non-stoichiometric blends of at least two monomers that are reacted to obtain oligomers, specifically from a minor amount of a given monomer in an excess amount of the other monomer. To prepare pre-polymers, the prior art processes involve directly blending the total amount of the two monomers and subjecting the overall mixture to a thermal treatment to enable the pre-polymer formation.

Despite the above advantages related to the use of pre-polymers, their manufacture is time consuming and expensive, as large heating tanks are required to handle the amount of material required to fulfill production needs.

Alternative polymerization methods for thio-urethane resins would thus be needed. It would be advantageous to reduce the amount of material subjected to pre-polymerization process.

An object of the invention is to provide a process of fast making a polythiourethane resin, which remedies to the drawbacks of the prior art methods, without increasing the curing time. This process should not impair the thermomechanical properties of the final material.

Another object of the invention is to provide a method of curing polythiourethane-based casted substrates

substantially free from optical defects, in particular free from bubbles and/or striations resulting from the polymerization process, having high transmittance and clarity, as well as low yellowness index and resistant to aging.

The present inventors have found that the intermediate pre-polymer manufacturing method affected the properties of the final polymer. They discovered that modifying the process of preparation of the polythiourethane pre-polymer having isocyanate or isothiocyanate end groups by firstly blending the minor monomer (polythiol) with a part of the major monomer (polyisocyanate or polyisothiocyanate), secondly subjecting this mixture to a thermal polymerization treatment to enable oligomer formation, and thirdly diluting this concentrated mixture with the remaining part of major monomer, surprisingly led to an improvement of the thermal properties of the final casted polythiourethane polymer.

The present invention provides a method of fast curing a polythiourethane-based transparent casted substrate, usable for making optical articles such as ophthalmic lenses, which comprises the following steps 1), 2), 3), 4) and 5) or 1), 2'), 3), 4) and 5):

1) Providing a first component A comprising a polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, used in amounts adapted so that the molar ratio R2 of NCX/SH groups for said monomers ranges from 2:1 to 35:1, preferably from 3:1 to 35:1, X being O or S,
2) Providing a second component B comprising at least one polythiol monomer B2,
or 2') Providing a second component B comprising a polythiourethane pre-polymer B1 having thiol end groups, said pre-polymer B1 having been prepared from at least one polythiol monomer and at least one polyisocyanate or polyisothiocyanate monomer,
3) Mixing together first and second components A and B and filling a molding cavity of a casting mold assembly with the resulting polymerizable mixture,
4) Curing said polymerizable mixture to obtain a polythiourethane based transparent substrate, and
5) Recovering the polythiourethane-based transparent substrate from the casting mold assembly,
wherein said pre-polymer A1 has been prepared by:

a) Mixing said at least one polyisocyanate or polyisothiocyanate monomer and said at least one polythiol monomer in initial amounts such that the initial molar ratio R1 of NCX/SH groups for said monomers ranges from 0.3 R2 to 0.95 R2 in the mixture resulting from step a), X being O or S,
b) Polymerizing the mixture resulting from step a),
c) Adding to the mixture resulting from step b) an additional amount of at least one polyisocyanate or polyisothiocyanate monomer such that the molar ratio of NCX/SH groups for all the monomers used in the preparation of said pre-polymer A1 is equal to R2, X being O or S.

The foregoing and other objects, features and advantages of the present invention will become readily apparent to those skilled in the art from a reading of the detailed description hereafter when considered in conjunction with the accompanying drawing, wherein figure 1 represents the plotting of the glass transition temperature of the polythiourethane substrate as a function of the amount of uretidione by-product formed for the different lenses prepared in the experimental part.

## DETAILED DESCRIPTION OF THE INVENTION

The substrate of the invention is an organic glass substrate, made from a thermosetting resin. The polymer matrix of the substrate is obtained from a material composition ("substrate composition") comprising at least one polymerizable pre-polymer, and at least two polymerizable pre-polymer in some embodiments.

The substrate is preferably an optical article substrate, more preferably an optical lens substrate. The optical article is preferably an ophthalmic lens, such as a plastic eyeglass lens.

In the present description, unless otherwise specified, a substrate is understood to be transparent when the observation of an image through said substrate is perceived with no significant loss of contrast, that is, when the formation of an image through said substrate is obtained without adversely affecting the quality of the image. This definition of the term "transparent" can be applied to all objects qualified as such in the description, unless otherwise specified.

The term "ophthalmic lens" is used to mean a lens adapted to a spectacle frame to protect the eye and/or correct the sight. Said lens can be chosen from afocal, unifocal, bifocal, trifocal, progressive lenses and Fresnel lenses or any other kind of lenses having a discontinuous surface. Although ophthalmic optics is a preferred field of the invention, it will be understood that this invention can be applied to optical elements of other types such as, for example, lenses for optical instruments, filters particularly for photography or astronomy, optical sighting lenses, ocular visors, optics of lighting systems, screens, glazings, etc.

If the optical article is an optical lens, it may be coated on its front main surface, rear main side, or both sides with one or more functional coatings. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a plano or biplano article.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material may act as support for a stack of one or more coatings or layers.

The refractive index of the polythiourethane-based substrate is preferably 1.52 or greater, more preferably 1.54 or greater, more preferably 1.56 or greater, more preferably 1.58 or greater, more preferably 1.60 or greater, and still more preferably 1.65 or greater or 1.67 or greater, and it is preferably 1.80 or less, more preferably 1.70 or less, and still more preferably 1.67 or less. Unless otherwise specified, the refractive indexes referred to in the present application are expressed at 25°C at a wavelength of 550 nm.

The fast cure polymerizable composition leading to a polythiourethane-based material is composed of two main components.

A first component A comprises a polythiourethane pre-polymer A1 having isocyanate or isothiocyanate end groups is provided in step 1) and has been prepared from at least one polythiol monomer and at least one polyisocyanate or polyisothiocyanate monomer, the latter being used in excess. The first component A comprises therefore oligomers and the initial monomers that did not polymerize, if any.

In a first embodiment of the present process, the second component B provided in step 2) is comprised of at least one polythiol monomer B2.

In a second embodiment of the present process, the second component B provided in step 2') is comprised of at least one polythiourethane pre-polymer B1 having thiol end groups, said pre-polymer B1 having been prepared from at least one polythiol monomer and at least one polyisocyanate or polyisothiocyanate monomer, the former being used in excess. The second component B comprises therefore oligomers and the initial monomers that did not polymerize, when present.

Compared to prior art processes which use only iso(thio)cyanate or thiol monomers, the present invention uses at least one polythiourethane pre-polymer.

By pre-polymer, it is meant a polymer or oligomer comprising pre-polymer molecules. By pre-polymer molecule, it is meant a macromolecule or oligomer molecule capable of entering, through reactive (polymerizable) groups, into further polymerization, thereby contributing more than one monomeric unit to at least one chain of the final macromolecule. It is generally formed from two or more different monomers.

The polythiourethane pre-polymer A1 having isocyanate or isothiocyanate end groups is prepared in a multistage process that will be detailed later. It is obtained by reacting at least one polyisocyanate or polyisothiocyanate monomer and at least one polythiol monomer in a proportion such that the molar ratio R2 of isocyanate or isothiocyanate groups to thiol groups NCX/SH for said monomers ranges from 2:1 to 35:1, preferably from 3:1 to 35:1 and preferably in the absence of a catalyst, X being O or S, at a temperature preferably ranging from 50°C to 150°C.

The polythiourethane pre-polymer B1 having thiol end groups, when used in the present process, is prepared by reacting at least one polyisocyanate or polyisothiocyanate monomer and at least one polythiol monomer in a proportion such that the molar ratio R'2 of the thiol groups to the isocyanate or isothiocyanate groups SH/NCX preferably ranges from 3:1 to 35:1, preferably in the absence of a catalyst, X being O or S.

In one embodiment, the polythiourethane pre-polymer B1 having thiol end groups, when used in the present process, is prepared by directly blending the total amount of the two monomers (the at least one polyisocyanate or polyisothiocyanate monomer and the at least one polythiol monomer) and subjecting the overall mixture to a thermal treatment to enable the pre-polymer formation. Stated otherwise, in this embodiment, the polythiourethane pre-polymer B1 having thiol end groups, when used in the present process, is directly prepared by mixing the at least one polyisocyanate or polyisothiocyanate monomer and the at least one polythiol monomer at the desired R'2 ratio.

Polythiol and polyisocyanate or polyisothiocyanate compounds used to prepare polythiourethane pre-polymers A1 or B1 are considered herein as monomers, even when they are oligomers.

By polyisocyanate, it is meant any compound comprising at least two isocyanate groups, in other words diisocyanates, triisocyanates, etc. Polyisocyanate pre-polymers may be used. The polyisocyanate may be any suitable polyisocyanate having two or more, preferably two or three isocyanate functions.

The polyisocyanates may be selected from aliphatic, aromatic, cycloaliphatic or heterocyclic polyisocyanates and mixtures thereof.

Polyisothiocyanates are defined in the same manner as polyisocyanates above, by replacing the "isocyanate" group by the "isothiocyanate" group.

In one embodiment of the invention, said polyisocyanate or polyisothiocyanate monomer is a compound of formula (VI):

$$R^2(NCX)_{n2} \qquad (VI)$$

wherein X represents O or S, n2 represents an integer ranging from 2 to 6 and $R^2$ represents an aliphatic, alicyclic, heterocyclic or aromatic group.

The preferred polyisocyanate or isothiocyanate monomers are those having the formulae:

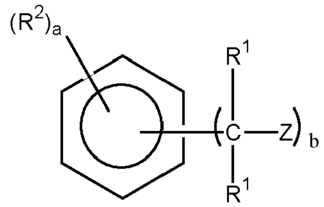

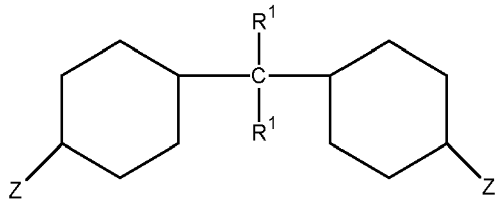

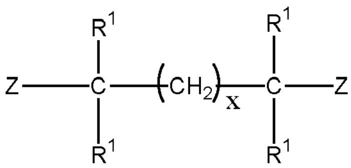

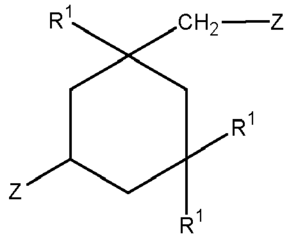

wherein $R^1$ is independently H or a $C_1$-$C_5$ alkyl group, preferably $CH_3$ or $C_2H_5$;
$R^2$ is H, an halogen, preferably Cl or Br, or a $C_1$-$C_5$ alkyl group, preferably $CH_3$ or $C_2H_5$;
Z is -N=C=X, with X being O or S, preferably O;
a is an integer ranging from 1 to 4, b is an integer ranging from 2 to 4 and $a + b \leq 6$; and
x is an integer from 1 to 10, preferably 1 to 6.

The polyisocyanates of the invention are preferably diisocyanates. Among the available diisocyanates may be cited toluene-2,4-diisocyanate, toluene-2,6-diisocyanate, diphenylmethane-4,4'-diisocyanate, diphenylmethane-2,4'-diisocyanate, paraphenylene diisocyanate, xylylene diisocyanate, biphenyl-diisocyanate, 3,3'-dimethyl-4,4'-diphenylene diisocyanate, tetramethylene-1,4-diisocyanate, hexamethylene-1,6-diisocyanate, 2,2,4-trimethyl hexane-1,6-diisocyanate, lysine methyl ester diisocyanate, bis(isocyanatoethyl) fumarate, isophorone diisocyanate (IPDI), ethylene diisocyanate, dodecane-1,12-diisocyanate, cyclobutane-1,3-diisocyanate, cyclohexane-1,3-diisocyanate, cyclohexane-1,4-diisocyanate, methylcyclohexyl diisocyanate, hexahydrotoluene-2,4-diisocyanate, tetramethylxylylene diisocyanate, hexahydrotoluene-2,6-diisocyanate, hexahydrophenylene-1,3-diisocyanate, hexahydrophenylene-1,4-diisocyanate, perhydro diphenylmethane-2,4'-diisocyanate, perhydro phenylmethane-4,4'-diisocyanate (or bis-(4-isocyanatocyclohexyl)-methane, or 4,4'-dicyclohexyl methanediisocyanate), bis(isocyanatomethyl) cyclohexane, dicyclohexylmethane diisocyanate, 2,5(or 2,6)-bis(isocyanatomethyl)bicyclo-[2.2.1]-heptane, and their mixtures.

Other non-limiting examples of polyisocyanates are the isocyanurates from isophorone diisocyanate and 1,6-hexamethylene diisocyanate, both of which are commercially available. Further polyisocyanates suitable for the present invention are described in detail in WO 98/37115, WO 2014/133111 or EP 1877839.

The polythiols that may be used in the present invention are defined as compounds comprising at least two sulfhydryl (mercapto) groups, in other words dithiols, trithiols, tetrathiols etc. Polythiols pre-polymers may be used. The polythiol may be any suitable polythiol having two or more, preferably two or three thiol functions. The polythiol can be used for the preparation of polythiourethane pre-polymers A1 or B1, but also directly as compound B2 in component B during step 2) of the present process.

In one embodiment of the invention, said polythiol monomer is a compound of formula:

$$R^1(SH)_{n1} \qquad (I)$$

wherein n1 represents an integer ranging from 2 to 6 and $R^1$ represents an aliphatic, alicyclic, heterocyclic or aromatic group.

Among the preferred polythiol monomers and/or oligomers suitable in accordance with the present invention, there may be cited aliphatic polythiols such as trimethylolpropanetris(2-mercaptoacetate), trimethylolpropanetris(3-mercaptopropionate), trimethylolethanetris(2-mercaptoacetate), trimethylolethanetris(3-mercaptopropionate), pentaerythritol tetrakis(2-mercaptoacetate), pentaerythritol tetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptopropyl)disulfide, 2,3-bis((2-mercaptoethyl)thio)-1-propanethiol, 4,8(or 4,7 or 5,7)-dimercaptomethyl-1,11-dimercapto-3,6,9-trithiaundecane, 2,5-dimercaptomethyl-1,4-dithiane, and 2,5-bis[(2-mercaptoethyl)thiomethyl]-1,4-dithiane, 1-(1'-mercaptoethylthio)-2,3-dimercaptopropane, 1-(2'-mercapropylthio)-2,3-dimercaptopropane, 1-(3'-mercapropylthio)-2,3-dimercaptopropane, 1-(4'-mercabutylthio)-2,3-dimercaptopropane, 1-(5'-mercapentylthio)-2,3-dimercaptopropane, 1-(6'-mercahexylthio)-2,3-dimercaptopropane, 1,2-bis-(4'-mercaptobutylthio)-3-mercaptopropane, 1,2-bis-(5'-mercaptopentylthio)-3-mercaptopropane, 1,2-bis-(6'-mercaptohexylthio)-3-mercaptopropane, 1,2,3-tris(mercaptomethylthio)propane, 1,2,3-tris-(3'-mercaptopropylthio)propane, 1,2,3-tris-(2'-mercaptoethylthio)propane, 1,2,3-tris-(4'-mercaptobutylthio)propane, 1,2,3-tris-(6'-mercaptohexylthio)propane, methanedithiol, 1,2-ethanedithiol, 1,1-propanedithiol, 1,2-propanedithiol, 1,3-propanedithiol, 2,2-propanedithiol, 1,6-hexanethiol-1,2,3-propanetrithiol, and 1,2-bis(2'-mercaptoethylthio)-3-mercaptopropane. Further examples of polythiols are shown in the formulae below or can be found in WO 2014/133111, EP 394495, US 4775733 or EP 1877839:

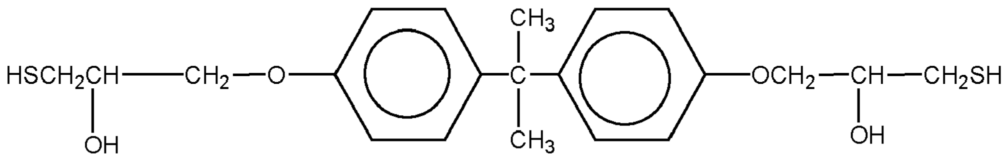

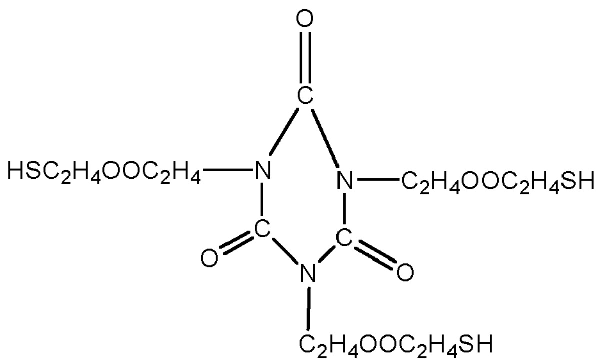

,

and

$$C_2H_5C(CH_2COOCH_2CH_2SH)_3$$

In one embodiment of the invention, said polythiol monomer is selected from the group consisting of pentaerythritol tetrakis(3-mercaptopropionate), pentaerythritol tetrakis(thioglycolate), tris(3-mercaptopropionate) trimethylolpropane, tris(mercaptoacetate) trimethylolpropane, and compounds of formulae (II) and (III):

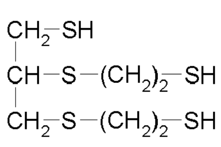

(II)

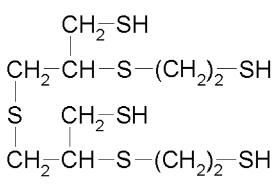

(III)

Preferred embodiments are combination of xylylene diisocyanate and pentaerythritol tetrakis(3-mercaptopropionate); combination of xylylene diisocyanate and 2,3-bis((2-mercaptoethyl)thio)-1-propanethiol; combination of 2,5 (or 2,6)-bis(isocyanatomethyl)bicyclo-[2.2.1]-heptane, pentaerythritol tetrakis(3-mercaptopropionate) and 2,3-bis((2-mercaptoethyl)thio)-1-propanethiol; combination of xylylene diisocyanate and 4,8(or 4,7 or 5,7)-dimercaptomethyl-1,11-dimercapto-3,6,9-trithiaundecane; combination of dicyclohexylmethane diisocyanate and 4,8(or 4,7 or 5,7)-dimercaptomethyl-1,11-dimercapto-3,6,9-trithiaundecane; or a combination of bis(2,3-epithiopropyl)disulfide and 4,8(or 4,7 or 5,7)-dimercaptomethyl-1,11-dimercapto-3,6,9-trithiaundecane. The most preferred polythiol is 2,3-bis((2-mercaptoethyl)thio)-1-propanethiol of formula (II).

In one embodiment, the polythiols have a viscosity at 25°C of 1 Pa.s or less, more preferably $5.10^{-1}$ Pa.s or less, more preferably $2.5.10^{-1}$ Pa.s or less, more preferably $2.10^{-1}$ Pa.s or less, more preferably $10^{-1}$ Pa.s or less and even more preferably of $0.5.10^{-1}$ Pa.s or less.

Specific examples of polythiourethane resins suitable to the present invention are those marketed by the Mitsui Chemicals company as MR® series, in particular MR6®, MR7® (refractive index: 1.67), MR8® (refractive index: 1.6) resins, MR10® (refractive index: 1.67). These optical materials as well as the monomers used for their preparation are especially described in the patents US 4689387, US 4775733, US 5059673, US 5087758 and US 5191055.

Depending on the embodiment of the invention, components A and B are prepared by polymerizing mixtures of required amounts of at least one polyisocyanate and/or at least one polyisothiocyanate monomer and at least one polythiol monomer, and optionally polyols monomers or polyamines monomers. Typically, components A and B can be prepared through classical thermal polymerization including induction and infrared heating or UV irradiation.

The global amounts of polyisocyanate or polyisothiocyanate monomers and polythiol monomers in the reaction medium are preferably adapted in each case in such a way that the molar ratio R2 of NCX/SH groups for the mixture of polyisocyanate or polyisothiocyanate monomers and polythiol monomers ranges from 2:1 to 35:1 for the preparation of polythiourethane pre-polymer A1, preferably from 3:1 to 30:1, more preferably from 5:1 to 10:1 or 6:1 to 10:1, even more preferably from 6:1 to 9:1 or 7:1 to 9:1. The preferred R2 ratio is around 8:1.

The amounts of polyisocyanate or polyisothiocyanate monomers and polythiol monomers in the reaction medium are preferably adapted in such a way that the molar ratio of SH/NCX groups for the mixture of polyisocyanate or polyisothiocyanate monomers and polythiol monomers preferably ranges from 3:1 to 35:1 for the preparation of polythiourethane pre-polymer B1 when such pre-polymer is employed, preferably from 3:1 to 30:1, more preferably from 6:1 to 10:1, X being O or S.

In one embodiment, both components A and B are prepared without the use of a catalyst system, which allows better control of the polymerization reaction and results in pre-polymers of high stability in time. However, at least one of them or both can also be prepared using a catalyst as described below.

Generally, the first and second components A and B are comprised in the polymerizable mixture of step 3) in such an amount that the molar ratio of NCX to SH groups ranges from 0.8 to 1.2, preferably from 0.9 to 1.1, and is more preferably around 1. This molar ratio of reactive groups can be calculated from the amounts of starting materials used to prepare the polythiourethane substrate.

Preparation of pre-polymer B1 having thiol end groups has already been described in US 5908876 or US 2003/125410. A similar process can be used to prepare component B of the present invention.

The preparation of the polythiourethane pre-polymer A1 having isocyanate or isothiocyanate end groups will now be described.

According to the present process, said pre-polymer A1 is prepared by:

a) Mixing said at least one polyisocyanate or polyisothiocyanate monomer and said at least one polythiol monomer in initial amounts such that the initial molar ratio R1 of NCX/SH groups for said monomers ranges from 0.3 R2 to 0.95 R2 in the mixture resulting from step a), X being O or S,
b) Polymerizing the mixture resulting from step a),
c) Adding to the mixture resulting from step b) an additional amount of at least one polyisocyanate or polyisothiocyanate monomer such that the molar ratio of NCX/SH groups for all the monomers used in the preparation of said pre-polymer A1 is equal to R2, X being O or S.

The at least one polyisocyanate or polyisothiocyanate monomer used in step a) is preferably the same as the at least one polyisocyanate or polyisothiocyanate monomer used in step c).

In prior art processes, the pre-polymer A1 is directly prepared by mixing the at least one polyisocyanate or polyisothiocyanate monomer and the at least one polythiol monomer at the desired R2 ratio.

According to the present process, the pre-polymer A1 is prepared by first mixing the at least one polyisocyanate or polyisothiocyanate monomer and the at least one polythiol monomer at a certain starting molar ratio R1 of isocyanate/isothiocyanate functional groups to thiol functional groups (NCX/SH, X being O or S) lower than the desired final molar ratio R2, and then adding the rest of the at least one polyisocyanate or polyisothiocyanate monomer to dilute the pre-polymer and obtain the final NCX/SH ratio R2, X being O or S.

Thus, the mixture resulting from step c) of the present process is a mixture comprising the pre-polymer A1 itself and an additional amount of at least one polyisocyanate or polyisothiocyanate monomer.

Surprisingly, the glass transition temperature of the final polymer material is higher when using the pre-polymer A1 manufacturing process according to the invention rather than the prior art process where the pre-polymer A1 components are directly mixed. The gap between the two processes in terms of glass transition temperature difference is the highest when the molar ratio R1 of the major monomer to minor monomer is the lowest in the mixture subjected to

pre-polymerization (oligomerization) step b).

The process according to the invention presents several other advantages. It is more attractive to limit the volume to be subjected to heating process during polymerization step b), as lower size equipment is needed, and less energy is required. Further, when heat sensitive additive molecules such as dyes are to be used, introducing them in step c) of the present process limits their degradation.

Without wishing to be bound by any theory, the inventors believe that the decrease in glass transition temperature of the final polythiourethane polymer at high initial NCX/SH R1 ratio such as in prior art processes is due to the self-condensation of isocyanate or isothiocyanate monomers to form a uretidione or thio-uretidione dimer by-product, which is favored in this situation as compared to the situation where the initial NCX/SH ratio is lower.

Indeed, thiourethane polycondensation involves the reaction of iso(thio)cyanates with thiols. Depending on the conditions, side reactions may occur besides the main reaction, such as iso(thio)cyanate self-reaction. Cyclopolymerization of isocyanates can result in several species but the most common species is uretidione.

If significant amounts of the uretidione by-products are formed, it would result in increasing the amount of unreacted thiol groups in the final polymer. The lower glass transition temperature of prior art materials might be explained by residual free unreacted thiol groups or shorter polymer chains in the final product in view of consumption of NCX groups by side reactions, and thus overall reduced crosslinking.

The side reaction forming dimers of iso(thio)cyanates during the preparation of pre-polymer A1 is believed to occur to a larger extent when a higher excess of NCX groups is present as compared to thiol groups, thus favoring the formation of self-reaction products, and to a lesser extent when the NCX/SH ratio is lower since fewer NCX groups are available to undergo self-condensation. The formation of an uretidione by-product starting from two isocyanate compounds of formula $R^1$-NCO is schematized hereunder:

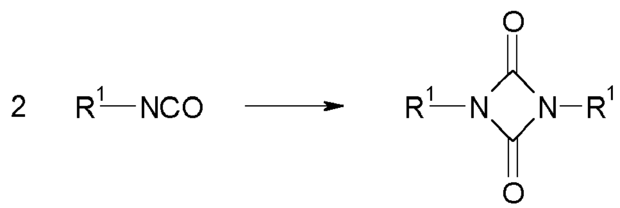

Uretidione

Herein, by lowering the starting concentration of polyisocyanate/polyisothiocyanate monomers compared to polythiol monomers, more thiourethane bonds are formed while lesser free iso(thio)cyanates are exposed to heat and have the possibility to self-react to form by-products and cause the presence of thiol residues in the final product.

In embodiments of the invention, said initial molar ratio R1 of NCX/SH groups ranges from 0.3 R2 to 0.8 R2, from 0.35 R2 to 0.7 R2, or from 0.35 R2 to 0.55 R2. The R1 and R2 ratios are calculated by adding the amounts of polyisocyanate and polyisothiocyanate monomers if a mixture of such monomers is used. Preferably, polyisocyanate monomers are used.

The R1 ratio preferably ranges from 2.4 to 7.6, more preferably from 2.5 to 7.5, even more preferably from 2.8 to 6, 2.8 to 5, or 2.8 to 4.4. In other embodiments, R1 preferably ranges from 3 to 6, from 3 to 5 (i.e., 3:1 to 5:1) or from 3 to 4.4.

A too low amount of polyisocyanate or polyisothiocyanate monomer as compared to the amount of polythiol monomer (i.e., a too low R1 ratio) should be avoided during step a) of the present process to prevent premature gelation of the mixture before it is introduced in the mold.

A too high amount of polyisocyanate or polyisothiocyanate monomer as compared to the amount of polythiol monomer (i.e., a too high R1 ratio) should be avoided during step a) of the present process to avoid obtaining a final polymer having a too low glass transition temperature.

The mixture polythiol/polyiso(thio)cyanate from which pre-polymer A1 is obtained may comprise 90% or less by weight of at least one polyol. Preferably, said mixture may comprise 80% or less, 70% or less, 60% or less, 50% or less, 40% or less, 30% or less, 20% or less, 10% or less by weight of at least one polyol. Also preferably, no polyol is used. Polyiso(thio)cyanate means polyisocyanate or polyisothiocyanate.

Component B, or the mixture polythiol/polyiso(thio)cyanate from which pre-polymer B1 is obtained, may comprise 90% or less by weight of at least one polyol. Preferably, said mixture may comprise 80% or less, 70% or less, 60% or less, 50% or less, 40% or less, 30% or less, 20% or less, 10% or less by weight of at least one polyol. Also preferably, no polyol is used.

The mixture of components A and B according to the invention may also include additives which are conventionally employed in polymerizable compositions intended for molding optical articles, in particular ophthalmic lenses, in conventional proportions, namely inhibitors, dyes, photochromic agents, UV absorbers, perfumes, deodorants, antioxidants, resin modifiers, color balancing agents, chain extenders, crosslinking agents, free radical scavengers such as antioxidants or hindered amine light stabilizers (HALS), dyes, pigments, fillers, adhesion accelerators, anti-yellowing

agents and mold release agents.

In one embodiment, the additives are added to first component A prior to the mixing with second component B.

UV absorbers are frequently incorporated into optical articles in order to reduce or prevent UV light from reaching the retina (in particular in ophthalmic lens materials). The UV absorber that may be used in the present invention preferably have the ability to at least partially block light having a wavelength shorter than 400 nm, but can also have an absorption spectrum extending to the visible blue light range of the electromagnetic spectrum (400-450 nm), in particular 420-450 nm.

Said UV absorbers both protect the user's eye from UV light and the substrate material itself, thus preventing it from weathering and becoming brittle and/or yellow. The UV absorber according to the invention can be, without limitation, a benzophenone-based compound, a benzotriazole-based compound or a dibenzoylmethane-based compound, preferably a benzotriazole compound. Suitable UV absorbers include without limitation 2-(2-hydroxyphenyl)-benzotriazoles such as 2-(2-hydroxy-3-tert-butyl-5-methylphenyl)-5-chlorobenzotriazole (Seesorb® 703 / Tinuvin® 326), or other allyl hydroxymethylphenyl chlorobenzotriazoles, 2-(5-chloro-2H-benzotriazol-2-yl)-6-(1,1-dimethylethyl)-4-methylphenol (Viosorb® 550), n-octyl-3-[3-tert-butyl-4-hydroxy-5-(5-chloro-2H-benzotriazol-2-yl)phenyl] propionate (Eversorb® 109), 2-(2-hydroxy-5-methoxyphenyl)benzotriazole, 2-(2-hydroxy-5-butoxyphenyl)benzotriazole and also Tinuvin® CarboProtect® from BASF. Preferred absorbers are of the benzotriazole family. Other examples of benzotriazole UV absorbers protecting from blue light can be found in WO 2017/137372.

The amount of UV absorber compounds according to the invention used herein is an amount sufficient to provide a satisfactory protection from UV light but not excessive so as to prevent precipitation. The inventive UV absorber compounds are generally present in an amount ranging from 0.05 to 4 % by weight relative to the optical material total weight (or per 100 parts by weight of the polymerizable compounds present in the mixture of components A and B or relative to the weight of the optical material composition), preferably from 0.1 to 3 % by weight, more preferably from 0.1 to 2 % by weight.

Among the release agents that may be used in the invention, there may be cited mono and dialkyl phosphates, alkyl ester phosphates, silicones, fluorinated hydrocarbon, fatty acids and ammonium salts. The preferred release agents are mono and dialkyl phosphates, alkyl ester phosphates and mixtures thereof. Such release agents are disclosed inter alia in US 4975328 and EP 0271839. The release agent is preferably used in an amount lower than or equal to 1 % by weight based on the total weight of the polymerizable compounds present in the mixture of components A and B.

The polymerizable mixture of the present invention can comprise a solvent, e.g., for promoting the dissolution of a catalyst, especially if it is under the form of a salt. In one embodiment, curing step 4) is carried out in the presence of at least one solvent of the salt catalyst, preferably 2-mercaptoethanol.

Any polar organic solvent can be used such as acetonitrile, tetrahydrofuran, dioxane, ethanol, 2-mercaptoethanol, acetone, and 3-methyl-2-butene-1-ol. The amount of solvent is generally kept below 2% by weight, based on the total weight of the polymerizable compounds present in the mixture of components A and B and preferably from 0 to 0.5% by weight, to avoid haze and bubbling. In one embodiment, the catalyst is used under the form of a solution in a compound such as 2-mercaptoethanol.

In the present invention, at least one catalyst can be used to catalyze bond formation in the process prior to curing step 4). In one embodiment, the resulting mixture of step 3) comprises at least one catalyst.

The catalyst is a system for accelerating the polymerization reaction. The catalyst can comprise one or more latent thermal catalysts.

The catalyst shall be used in the polymerizable composition in an effective amount, i.e., an amount sufficient to promote the polymerization of the mixture. Generally, the at least one catalyst is used in a proportion of 0.01 to 5 % by weight with respect to the total weight of polymerizable compounds present in the mixture of components A and B, more preferably from 0.02 to 2 % by weight. A too high amount of catalyst should be avoided to prevent premature gelation of the polymerizable mixture before it is introduced in the mold, in particular when a pre-polymer A1 is combined with a polythiol monomer B2.

The catalyst can be added at different stages of the present process.

In one embodiment, the catalyst is added to the polythiol monomers B2 during the preparation of component B, or to the polythiourethane pre-polymer B1 having thiol end groups, depending on the case. In other words, at least one catalyst is added to said second component B prior to step 4). In another embodiment, at least one catalyst is added to said first component A prior to step 4). In the preferred embodiment, the catalyst is added to the polythiol monomers B2 during the preparation of component B, prior to mixing step 3).

In one embodiment, the catalyst is added to the first componentA obtained in step 1) prior to mixture with component B or to the second component B obtained in step 2) or 2') prior to mixture with component A. In this embodiment, the catalyst can be added to pre-polymers A1 and/or B1 after their preparation, depending on the case.

In another preferred embodiment, the catalyst is added to the mixture of components A and B in step 3) of the present process.

In one embodiment, the catalyst is an anionic catalyst. The preferred catalysts are transition metal-based catalysts and ammonium salts of acids, these salts preferably fulfilling the condition $0.5 \leq pKa \leq 14$.

In the present application, pKa is expressed at 25°C. pKa can be measured in water at standard pressure by potentiometric (pH) titration, using a glass electrode and a pH meter.

In one embodiment, the catalyst is a salt compound of formula $M_m^{p+}Y_n^-$, wherein $M^{p+}$ is a cation of valence p selected from the group consisting of alkaline metal cations, alkaline earth metal cations, transition metal cations and ammonium groups of formula $NR_4^+$ in which R is an alkyl group having preferably from 1 to 10 carbon atoms, $Y^-$ is an anion such that the corresponding acid YH has a pKa fulfilling the condition $0.5 \leq pKa \leq 14$, m, n and p being integers such that n = m x p.

The preferred metallic cations of the salts are $Li^+$, $Na^+$, $K^+$, $Cs^+$, $Mg^{2+}$, $Ca^{2+}$, $Mn^{2+}$, $Ag^+$, $Ba^{2+}$ and $Al^{3+}$. The particularly preferred metallic cations are $Li^+$, $Na^+$ and $K^+$ due to their absence of color and solubility in the composition. Transition metals are less preferred because their salts can lead to colored compositions and therefore colored polymerized resins. In one embodiment, the method according to the invention does not use a catalyst containing tin.

The preferred $NR^+_4$ groups are those in which R is a $C_1$-$C_8$ alkyl group and more preferably, a methyl, ethyl, propyl, butyl or hexyl group.

Preferably, $Y^-$ is an anion such that the corresponding acid YH which fulfills the condition $0.5 \leq pKa \leq 10$ and more preferably $0.5 \leq pKa \leq 8$.

Preferably, the anion $Y^-$ is selected from the group consisting of thiocyanate, carboxylate anions, thiocarboxylate anions, acetylacetonate, diketone anions, acetoacetic ester, malonic ester anions, cyanoacetic ester anions, ketonitrile anions, malononitrile anion and anions of formula $RS^-$ wherein R is a substituted or non-substituted alkyl group having preferably from 1 to 10 carbon atoms or an aryl group having preferably from 6 to 12 carbon atoms.

The preferred anions $Y^-$ are $SCN^-$, acetylacetonate, acetate, thioacetate, formate and benzoate. The preferred salt catalyst is KSCN.

Among additional catalysts that can be used in the method of the invention, there may also be cited amines, such as tertiary amines (e.g., triethylamine or 3,5-lutidine), organometallic compounds, such as alkyltins or alkyltin oxides, in particular dibutyltin dilaurate, dibutyltin dichloride and dimethyltin dichloride. Several catalysts can be combined in the present process.

In a preferred embodiment, the method according to the invention does not use any catalyst that is not a salt catalyst.

Electron-donor compounds may also be used in combination with the catalyst, preferably a salt catalyst, especially when the polymerizable composition comprises poorly reactive thiols and/or iso(thio)cyanates. Generally, electron-donor compounds stabilize the cation of the salt catalyst. They thus contribute to dissociate the anion/cation ion pair and thus do increase the anion reactivity in the polymerizing medium, and therefore promote the polymerization reaction.

Electron-donor compounds are preferably selected from acetonitrile compounds such as malononitriles, amides, amines, imines, phosphines, sulfones, sulfoxides, trialkyl phosphites, triaryl phosphites, ethylene glycol ethers, crown ethers and cryptands. Preferred electron-donor compounds are crown ethers, cryptands, trialkyl phosphites, triaryl phosphites, alkylene glycols and alkylene glycol ethers, the most preferred one being 18-crown-6.

In one embodiment, curing step 4) is carried out in the presence of at least one electron-donor compound.

Examples of acetonitrile compounds are:

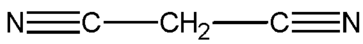

and

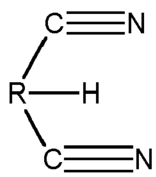

in which

R is an alkyl group, preferably a $C_1$-$C_6$ alkyl group such as methyl, ethyl, propyl, butyl.

The amide compounds may be primary, secondary or tertiary amide compounds. The trialkylphosphites and triarylphosphites may be represented by formula:

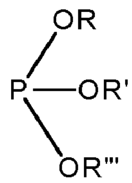

in which R, R', R''' are either an alkyl group, preferably a C1- C6 alkyl group or an aryl group having preferably 6 to 12 carbon atoms such as a phenyl group. Preferred are trialkylphosphites, for example $(C_2HsO)_3P$.

Electron-donor compounds may also be selected from crown ethers and cryptands.

These cyclic molecules are usually chosen to exhibit a good compromise between the heteroatom or metal size and the "cage" size, i.e., between the number of heteroatoms and the size and the "cage" size, i.e., between the number of heteroatoms and the size of the cycle.

The preferred crown ethers and cryptands may be represented by the following formulae:

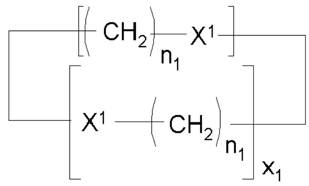

and

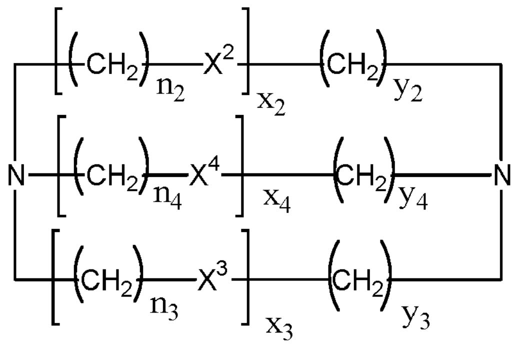

wherein $X^1$ represents O, S or NH, $x_1$ is an integer from 3 to 6, preferably from 3 to 4, $n_1$ is 2 or 3, $X^2$, $X^3$ and X4 represent O, S, $n_2$, $n_3$, $n_4$, $y_2$, $y_3$, $y_4$ are 2 or 3 and $x_2$, $x_3$, $x_4$, are 2 or 3.

Among the preferred crown ethers and cryptands there may be cited the following compounds:

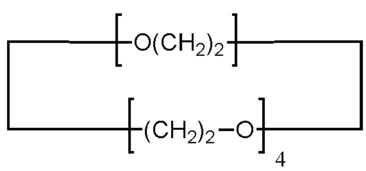

;

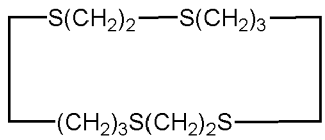

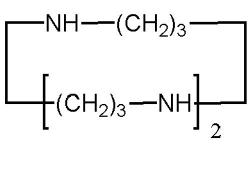

and

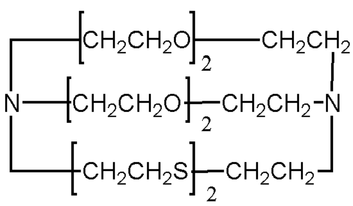

Examples of preferred crown ethers are 18-crown-6, 18-crown-7, 15-crown-5 and 15-crown-6.

The electron-donor compounds are preferably present in an amount ranging from 0 to 5 % by weight, preferably 0 to 1 % by weight, more preferably from 0.06 % to 0.6 % by weight, even more preferably from 0.17 % to 0.408 % by weight, with respect to the total weight of polymerizable compounds present in the mixture of components A and B.

The weight ratio of catalyst/electron-donor compound, when the latter is present, preferably ranges from 1/3 to 1/5.

The mixing of first component A with second component B in step 3) can be performed by any known mixing technique such as those mentioned in US 5973098. Preferably, components A and B to be mixed are added in a small reactor chamber and then mixed with a screw mixer. In one embodiment, the viscosity at 25°C of the mixture of components A and B ranges from 0.01 Pa.s to 5 Pa.s, preferably from 0.05 Pa.s to 0.5 Pa.s, even more preferably from 0.1 Pa.s to 0.3 Pa.s.

During step 3), a molding cavity of a casting mold assembly is filled with the mixture of first and second components A and B.

The casting mold assembly generally comprises two mold parts defining two molding surfaces that cooperate to form a molding cavity when moved from an open position to a closed position. Each of the molding surfaces can be concave, convex, or planar, depending on the desired article shape. The molding surface can be convex, e.g., to form a concave substrate surface, or concave, e.g., to form a convex substrate surface.

More specifically, the optical material composition can be poured into the cavity of two mold parts held together using an annular closure such as a gasket or an adhesive tape. A traditional mold comprises two pieces, called herein parts, typically made of mineral glass, at the periphery of which is disposed an annular closure member, defining with them the required molding cavity.

An annular closure member can be disposed around the periphery of the two mold pieces and attached to them. The conventional way to fill such a two-piece mold is by causing the (liquid) optical material composition to flow into the molding cavity through a casting opening provided for this purpose in the closure member. In at least a partly automated process, the molding cavity to be filled is vertically aligned with a filling device that is adapted to deliver a particular quantity of molding material through a nozzle.

Depending on the desired characteristics of the resulting optical material, degassing can be performed under reduced pressure and/or filtration can be performed under increased pressure or reduced pressure before pouring the optical material composition in the mold assembly.

After pouring the composition, the casting mold assembly, preferably a lens casting mold assembly, can be heated in an oven or a heating device immersed in water according to a predetermined temperature program to cure the resin in the mold assembly.

In one embodiment, the mixture of first and second components A and B is maintained at room temperature (20-30°C) in the casting mold assembly until gelation occurs, before starting curing step 4).

The curing step 4) of the mixture, which provides a polythiourethane-based transparent substrate, can be performed in the presence of at least one catalyst, and can be implemented using any well known polymerization technique and in particular thermal polymerization including induction and infrared heating, or radiation polymerization. The curing time of step 4) is preferably lower than 10 or 5 hours, more preferably lower than 4, 3 or 2 hours. As used herein, curing refers to a chemical process of converting a monomer or an oligomer into a polymer of higher molar mass and then into a network.

Curing is generally carried out at elevated temperature in an oven in order to complete polymerization, for example an air oven. It can be effected at a temperature ranging from 50 to 150°C, or from 100 to 130°C. Thereafter, the mold assembly is withdrawn from the heating source, the annular closure member is removed and the mold parts disassembled.

The resin molded product may then be annealed, if necessary, at a temperature preferably ranging from 100°C to 150°C.

In step 5) of the present process, the polythiourethane-based transparent substrate is recovered from the mold. The recovered substrate or article can then be edged to obtain a lens.

The present process can be used to manufacture a finished lens, having both sides at the required geometries, or a semi-finished lens, having one face that still needs to be surfaced at the required geometry.

Thereafter the substrate or article can be tinted or coated to improve various properties such as scratch resistance or reflection properties.

The invention also relates to a polythiourethane-based transparent casted substrate obtainable by the above described process. It is distinguishable from the polythiourethane-based transparent casted substrates obtainable by the prior art processes by means of its improved thermomechanical properties, in particular by its higher glass transition temperature, as demonstrated in the experimental part.

The article resulting from the present process has satisfactory color properties, which can be quantified by the yellowness index Yi. The degree of whiteness of the inventive optical material may be quantified by means of colorimetric measurements, based on the CIE tristimulus values X, Y, Z such as described in the standard ASTM E313 with illuminant

C observer 2°. The optical article according to the invention preferably has a low yellowness index Yi, i.e., lower than 10, more preferably lower than 8, even better lower than 6, as measured according to the above standard. The yellowness index Yi is calculated per ASTM method E313 through the relation Yi = (127.69 X- 105.92 Z)) / Y, where X, Y, and Z are the CIE tristimulus values.

The substrate according to the invention preferably has a colorimetric coefficient b* (in transmission) as defined in the CIE (1976) L*a*b* international colorimetric lower than or equal to 10, 5, 4, 2 or 1, and in a general manner higher or equal to 0. A low colorimetric coefficient b* can be correlated with a limited or non-yellow appearance (transmission color). Indeed, positive values on the b* axis indicate amounts of yellow, while negative values indicate amounts of blue.

The following examples illustrate the present invention in a more detailed, but non-limiting manner. Unless stated otherwise, all thicknesses disclosed in the present application relate to physical thicknesses.

EXAMPLES

1. Chemicals used

Optical materials were prepared from a composition comprising polymerizable monomers, Zelec UN® (CAS 3896-11-5) as a mold release agent and a catalyst solution comprising KSCN (CAS 333-20-0), 18-crown-6 (CAS 17455-13-9) and mercaptoethanol (CAS 60-24-2). The monomers used in the present examples were xylylene diisocyanate (CAS 3634-83-1) and 2,3-bis((2-mercaptoethyl)thio)-1-propanethiol (CAS 131538-00-6), in order to produce a polythiourethane transparent matrix having a refractive index of 1.67. The monomers were used as received without treatment for eliminating moisture.

2. Evaluation of the polymerizable composition and of lenses after curing

The following test procedures were used to evaluate the compositions and optical articles prepared according to the present invention. Several samples for each system were prepared for measurements and the reported data were calculated with the average of the different samples.

The glass transition temperature (Tg) of the lenses has been evaluated by DMA (dynamic mechanical analysis) and DSC (Differential scanning calorimetry).

Viscosity was measured using a viscometer (Cone & Plate Viscometer, Model CAP 2000+L from Brookfield).

The infrared transmission spectra at normal incidence were measured with the Nicolet iS50 FTIR spectrometer instrument in a range of 500-4000 $cm^{-1}$ with a resolution of 4 $cm^{-1}$. The uretidione parameter was calculated based on a spectrum of the final polythiourethane substrate obtained from FTIR (Fourier Transform Infrared Spectroscopy) using the equation below:

$$Uretidione\ parameter = \frac{\%Tc}{\%Tu}$$

Transmission corresponding to the uretidione functional group resonance frequency ($\%T_u$) was taken at 1785 $cm^{-1}$ and the peak at 2920 $cm^{-1}$ assigned to $CH_2$ bond (including the $CH_2$ bond of the thiol monomer) ($\%T_c$) was used as a normalized signal. The higher the uretidione parameter, the lower the uretidione transmittance, therefore the more uretidione bond present (higher uretidione parameter). Uretidione being a by-product, a low uretidione parameter is desired.

3. Preparation of polythiourethane pre-polymer A1 having isocyanate end groups for examples 1-5 and comparative example 1

In a reactor equipped with a thermal probe and an agitator, a determined amount of the polyisocyanate monomer m-xylylene diisocyanate (XDI) was charged and heated up to 120°C. Then, 2,3-bis((2-mercaptoethyl)thio)-1-propanethiol was introduced and mixed with the polyisocyanate in an amount such that the "initial" molar ratio of the isocyanate functions to the thiol functions NCO/SH was equal to R1 (process step a)). R1 ranged from 2:1 (comparative example 1) to 7:1 (example 5), as indicated in table 1.

The mixture was heated for 3.5 hours at 120°C, then cooled to room temperature, and an additional determined amount (see table 1) of the polyisocyanate monomer m-xylylene diisocyanate (XDI) was added to the mixture, such that the "final" molar ratio of the isocyanate functions to the thiol functions NCO/SH of monomers used in this process (R2) was equal to 8:1 (process step c)). The resulting pre-polymer A1 was then transferred into an appropriate drum and stored in a cold room. Pre-polymer A1 was prepared without the use of catalyst.

4. Preparation of polythiourethane pre-polymer A1 having isocyanate end groups for comparative example 2

In a reactor equipped with a thermal probe and an agitator, a determined amount of the polyisocyanate monomer m-xylylene diisocyanate (XDI) was charged and heated up to 120°C. Then, 2,3-bis((2-mercaptoethyl)thio)-1-propanethiol was introduced and mixed with the polyisocyanate in an amount such that the molar ratio of the isocyanate functions to the thiol functions NCO/SH was 8:1 (89.66 % polyisocyanate, 10.34 % polythiol, by weight). The mixture was heated for 3.5 hours at 120°C. The resulting pre-polymer A1 was then cooled to around 35°C and transferred into an appropriate drum and stored in a cold room. Pre-polymer A1 was prepared without the use of catalyst.

5. Preparation of polythiourethane transparent casted substrates

Convex and concave biplane molds were assembled by using a tape. Center thickness was 2 mm.

In all examples and comparative examples, a determined amount of cooled down pre-polymer A1 prepared as described above was mixed with a determined amount of Zelec UN®. This mixture was stirred at between 5 to 15°C and degassed for 1 hour, degassed for 15 minutes without stirring, to form component A. In parallel, a determined amount of polythiol monomer 2,3-bis((2-mercaptoethyl)thio)-1-propanethiol B2 was mixed with a determined amount of the above-mentioned catalyst solution (8.5 % KSCN, 34.84 % 18-crown-6, 56.66 % 2-mercaptoethanol, by weight). This mixture was stirred at between 5 to 15°C and degassed for 1 hour, degassed for 15 minutes without stirring, to form component B.

Components A and B were then mixed with the molar ratio of SH:NCO adjusted to 1:1 in a small reactor while stirring and degassing for 5 minutes at 15°C and then further degassing without stirring for 2 minutes at 15°C to prevent gelation. Once the mixing was complete, the mold assemblies were filled with the help of a syringe and through a filter. The mixture comprised 58 parts by weight of starting materials of component A, 42 parts by weight of monomer B2, 0.4 part by weight of catalyst solution and 0.16 part by weight of Zelec UN®.

The assembled molds were held at room temperature for 10 minutes before inserting them in a convection oven preheated at 120°C. The mixture of the examples started gelation in the mold assemblies at room temperature. The polymerization reaction was carried out by letting the mold assemblies in the oven for 2 hours at 120°C.

In the context of the present invention, a gel designates the reaction product of components A and B in which the conversion rate of the reactive functions is significantly high. For example, said conversion rate ranges from 50 to 80% and preferably is about 70%.

The mold assemblies were then disassembled to obtain lenses with 2 mm center thickness comprising a body of polythiourethane transparent thermoset substrate, which were annealed at 120°C for 1h after disassembly. The lenses had a refractive index of 1.67 and no optical defects such as striations.

6. Compositions and results

The ratios of monomers used and results of the characterizations are shown in table 1. The percentages given for the monomers used are weight percentages as compared to the total weight of monomers used for the preparation of pre-polymer A1 having isocyanate end groups. The castings have been repeated and the data is the average of at least 3 trials.

**Table 1**

| Process step | Step a) | | | Step c) | | Step 5 | |
|---|---|---|---|---|---|---|---|
| | NCO/SH (R1 initial molar ratio) | Initial isocyanate amount (%) | Initial thiol amount (%) | Additional isocyanate amount (%) | Viscosity (cPo) | Tg (°C) | Uretidione parameter |
| Comparative example 1* | 2:1 | 22.41 | 10.34 | 67.24 | - | - | - |
| Example 1 | 3:1 | 33.62 | 10.34 | 56.04 | 58 | 80.58 | 0.858 |
| Example 2 | 4:1 | 44.83 | 10.34 | 44.83 | 51 | 79.55 | 0.866 |
| Example 3 | 5:1 | 56.04 | 10.34 | 33.62 | 44 | 79.60 | 0.864 |
| Example 4 | 6:1 | 67.24 | 10.34 | 22.41 | 27 | 78.16 | 0.875 |
| Example 5 | 7:1 | 78.45 | 10.34 | 11.21 | 24 | 78.75 | 0.881 |

(continued)

| Process step | Step a) | | | Step c) | | Step 5 | |
|---|---|---|---|---|---|---|---|
| | NCO/SH (R1 initial molar ratio) | Initial isocyanate amount (%) | Initial thiol amount (%) | Additional isocyanate amount (%) | Viscosity (cPo) | Tg (°C) | Uretidione parameter |
| Comparative example 2 | 8:1 | 89.66 | 10.34 | 0 | 38 | 77.84 | 0.882 |
| * The mixture gelled during pre-polymerization step b). | | | | | | | |

Lenses without any optical defect were obtained after a perfectly controlled polymerization reaction.

Surprisingly, the glass transition temperature (Tg) was affected by the starting NCO/SH molar ratio R1 during the preparation of pre-polymer A1, although the same global amounts of thiol and isocyanate monomers were used in all examples and comparative examples.

It can be observed that increasing the R1 initial molar ratio of NCO/SH groups tends to decrease the glass transition temperature of the resulting polythiourethane-based substrate, and increase the amount of uretidione by-product formed. As shown on figure 1, the glass transition temperature of the final material increases as the amount of uretidione by-product formed decreases.

Yet, in comparative example 1, where a too low amount of polyisocyanate monomer as compared to the amount of polythiol monomer was used (low R1 ratio of 2), undesirable premature gelation occurred, and the mixture solidified during polymerization step b). Thus, measuring viscosity and thermomechanical properties was not possible. In examples 1-5, the mixtures have not started gelling before transfer into the mold.

Therefore, the new way proposed by the present inventors to prepare the pre-polymer A1 having isocyanate or isothiocyanate end groups as compared to the conventional process represented by comparative example 2 allows to improve the thermal properties of the resulting polythiourethane-based substrate.

## Claims

**1.** A method of curing a polythiourethane-based transparent casted substrate, comprising the following steps 1), 2), 3), 4) and 5) or 1), 2'), 3), 4) and 5):

1) Providing a first component A comprising a polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, used in amounts adapted so that the molar ratio R2 of NCX/SH groups for said monomers ranges from 2:1 to 35:1, X being O or S,
2) Providing a second component B comprising at least one polythiol monomer B2,
or 2') Providing a second component B comprising a polythiourethane pre-polymer B1 having thiol end groups, said pre-polymer B1 having been prepared from at least one polythiol monomer and at least one polyisocyanate or polyisothiocyanate monomer,
3) Mixing together first and second components A and B and filling a molding cavity of a casting mold assembly with the resulting polymerizable mixture,
4) Curing said polymerizable mixture to obtain a polythiourethane-based transparent substrate, and
5) Recovering the polythiourethane-based transparent substrate from the casting mold assembly,
wherein said pre-polymer A1 has been prepared by:

a) Mixing said at least one polyisocyanate or polyisothiocyanate monomer and said at least one polythiol monomer in initial amounts such that the initial molar ratio R1 of NCX/SH groups for said monomers ranges from 0.3 R2 to 0.95 R2 in the mixture resulting from step a), X being O or S,
b) Polymerizing the mixture resulting from step a),
c) Adding to the mixture resulting from step b) an additional amount of at least one polyisocyanate or polyisothiocyanate monomer such that the molar ratio of NCX/SH groups for all the monomers used in the preparation of said pre-polymer A1 is equal to R2, X being O or S.

**2.** The method according to claim 1, wherein said molar ratio R2 of NCX/SH groups ranges from 5:1 to 10:1, preferably from 6:1 to 9:1.

**3.** The method according to any one of the preceding claims, wherein said initial molar ratio R1 of NCX/SH groups ranges from 0.35 R2 to 0.55 R2.

**4.** The method according to any one of the preceding claims, wherein the first and second components A and B are comprised in the polymerizable mixture of step 3) in such an amount that the molar ratio of NCX to SH groups ranges from 0.8 to 1.2, preferably from 0.9 to 1.1, X being O or S.

**5.** The method according to any one of the preceding claims, wherein curing step 4) is carried out in the presence of at least one catalyst.

**6.** The method according to any one of the preceding claims, wherein at least one catalyst is added to said second component B prior to step 4) or to said first component A prior to step 4).

**7.** The method according to claim 5 or 6, wherein said catalyst is a salt compound of formula $M_m^{p+}Y_n^-$, wherein $M^{p+}$ is a cation of valence p selected from the group consisting of alkaline metal cations, alkaline earth metal cations, transition metal cations and ammonium groups of formula $NR_4^+$ in which R is an alkyl group having preferably from 1 to 10 carbon atoms, $Y^-$ is an anion such that the corresponding acid YH has a pKa fulfilling the condition $0.5 \leq pKa \leq 14$, m, n and p being integers such that n = m x p.

**8.** The method according to any one of the preceding claims, wherein the curing time of step 4) is lower than 10 hours, preferably lower than 5 hours.

**9.** The method according to any one of the preceding claims, wherein said polythiol monomer is a compound of formula:

$$R^1(SH)_{n1} \qquad (I)$$

wherein n1 represents an integer ranging from 2 to 6 and $R^1$ represents an aliphatic, alicyclic, heterocyclic or aromatic group.

**10.** The method according to any one of the preceding claims, wherein said polythiol monomer is selected from the group consisting of pentaerythritol tetrakis(3-mercaptopropionate), pentaerythritol tetrakis(thioglycolate), tris(3-mercaptopropionate) trimethylolpropane, tris(mercaptoacetate) trimethylolpropane and compounds of formulae (II) and (III):

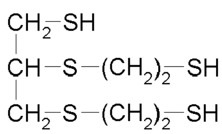
(II)

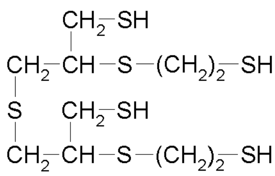
(III)

**11.** The method according to any one of the preceding claims, wherein said polyisocyanate or polyisothiocyanate monomer is a compound of formula (VI):

$$R^2(NCX)_{n2} \qquad (VI)$$

wherein X represents O or S, n2 represents an integer ranging from 2 to 6 and $R^2$ represents an aliphatic, alicyclic, heterocyclic or aromatic group.

**12.** The method according to any one of the preceding claims, wherein said polyisocyanate or polyisothiocyanate monomer is selected from the group consisting of toluene-2,4-diisocyanate, toluene-2,6-diisocyanate, diphenylmethane-4,4'-diisocyanate, diphenylmethane-2,4'-diisocyanate, paraphenylene diisocyanate, xylylene diisocyanate, biphenyl-diisocyanate, 3,3'-dimethyl-4,4'-diphenylene diisocyanate, tetramethylene-1,4-diisocyanate, hexamethylene-1,6-diisocyanate, 2,2,4-trimethyl hexane-1,6-diisocyanate, lysine methyl ester diisocyanate, bis(isocyanatoethyl) fumarate, isophorone diisocyanate, ethylene diisocyanate, dodecane-1,12-diisocyanate, cyclobutane-1,3-diisocyanate, cyclohexane-1,3-diisocyanate, cyclohexane-1,4-diisocyanate, methylcyclohexyl diisocyanate, hexahydrotoluene-2,4-diisocyanate, tetramethylxylylene diisocyanate, hexahydrotoluene-2,6-diisocyanate, hexahydrophenylene-1,3-diisocyanate, hexahydrophenylene-1,4-diisocyanate, perhydro diphenylmethane-2,4'-diisocyanate, 4,4'-dicyclohexylmethanediisocyanate, bis(isocyanatomethyl)cyclohexane, dicyclohexylmethane diisocyanate, 2,5-bis(isocyanatomethyl)bicyclo-[2.2.1]-heptane and 2,6-bis(isocyanatomethyl)bicyclo-[2.2.1]-heptane.

**13.** The method according to any one of the preceding claims, comprising the following step 2):
2) Providing a second component B comprising at least one polythiol monomer B2.

**14.** The method according to any one of the preceding claims, wherein the substrate is an optical lens substrate.

**15.** A polythiourethane-based transparent casted substrate obtainable by the method of any one of the preceding claims.

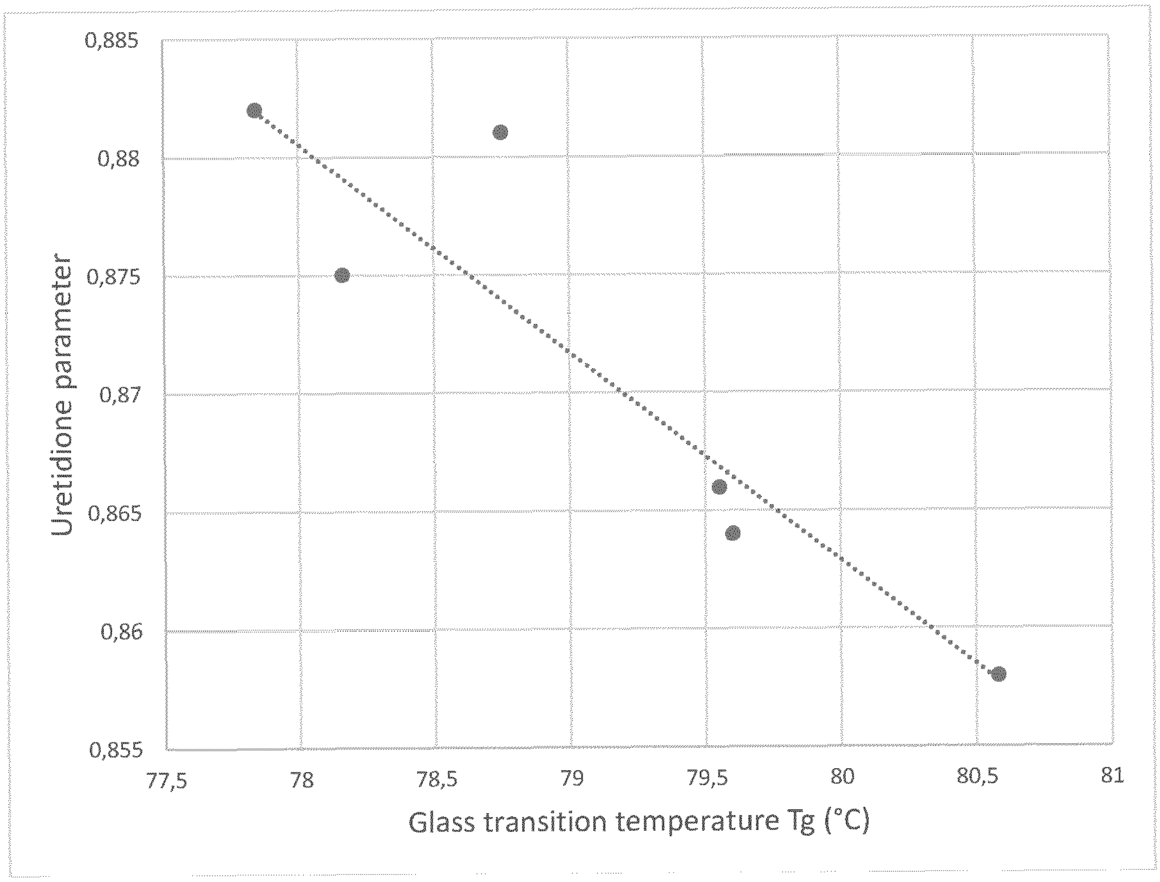
0,885
0,88
0,875
0,87
0,865
0,86
0,855
Uretidione parameter
77,5
78
78,5
79
79,5
80
80,5
81
Glass transition temperature Tg (°C)

Figure 1

Europäisches Patentamt
European Patent Office
Office européen des brevets

# EUROPEAN SEARCH REPORT

Application Number
EP 23 30 5487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 116 558 A1 (MITSUI CHEMICALS INC [JP]) 11 November 2009 (2009-11-11)<br>* paragraphs [0001], [0006], [0073] - [0082]; claims; examples 4, 5 * | 15<br>1-14 | INV.<br>C08G18/10<br>C08G18/22<br>C08G18/38<br>C08G18/76<br>C08G18/80 |
| X<br>A | EP 3 919 967 A1 (MITSUI CHEMICALS INC [JP]) 8 December 2021 (2021-12-08)<br>* paragraphs [0001], [0012] - [1540], [0052], [0057], [0212] - [217197]; claims; examples 1B, 2B; table 2 * | 15<br>1-14 | |
| X,D<br>A | WO 03/040205 A1 (ESSILOR INT [FR]) 15 May 2003 (2003-05-15)<br>* page 1, lines 8-15 *<br>* page 2, lines 15-34 *<br>* page 9, paragraph 8-21 *<br>* page 13, line 4 - page 14, line 15; claims; examples; table I * | 15<br>1-14 | |
| X<br>A | EP 3 992 224 A1 (HOYA LENS THAILAND LTD [TH]) 4 May 2022 (2022-05-04)<br>* paragraphs [0001], [0008], [0041]; claims; examples * | 15<br>1-14 | TECHNICAL FIELDS SEARCHED (IPC)<br>C08G |

The present search report has been drawn up for all claims

| Place of search | Date of completion of the search | Examiner |
|---|---|---|
| Munich | 13 September 2023 | Eigner, Markus |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 30 5487

This annex lists the patent family members relating to the patent documents cited in the above-mentioned European search report. The members are as contained in the European Patent Office EDP file on
The European Patent Office is in no way liable for these particulars which are merely given for the purpose of information.

13-09-2023

| Patent document cited in search report | | Publication date | Patent family member(s) | | | Publication date |
|---|---|---|---|---|---|---|
| EP 2116558 | A1 | 11-11-2009 | AU | 2008220347 | A1 | 04-09-2008 |
| | | | CN | 101627069 | A | 13-01-2010 |
| | | | EP | 2116558 | A1 | 11-11-2009 |
| | | | JP | 5254201 | B2 | 07-08-2013 |
| | | | JP | WO2008105138 | A1 | 03-06-2010 |
| | | | KR | 20090111859 | A | 27-10-2009 |
| | | | US | 2010016517 | A1 | 21-01-2010 |
| | | | WO | 2008105138 | A1 | 04-09-2008 |
| EP 3919967 | A1 | 08-12-2021 | CN | 113557256 | A | 26-10-2021 |
| | | | EP | 3919967 | A1 | 08-12-2021 |
| | | | JP | 7141529 | B2 | 22-09-2022 |
| | | | JP | 2022036209 | A | 04-03-2022 |
| | | | JP | WO2021153632 | A1 | 05-08-2021 |
| | | | KR | 20210116710 | A | 27-09-2021 |
| | | | KR | 20220138004 | A | 12-10-2022 |
| | | | US | 2022041789 | A1 | 10-02-2022 |
| | | | US | 2023051738 | A1 | 16-02-2023 |
| | | | WO | 2021153632 | A1 | 05-08-2021 |
| WO 03040205 | A1 | 15-05-2003 | AT | 344809 | T | 15-11-2006 |
| | | | CA | 2465796 | A1 | 15-05-2003 |
| | | | CN | 1599763 | A | 23-03-2005 |
| | | | DE | 60215970 | T2 | 26-07-2007 |
| | | | EP | 1448650 | A1 | 25-08-2004 |
| | | | JP | 4215642 | B2 | 28-01-2009 |
| | | | JP | 2005508417 | A | 31-03-2005 |
| | | | KR | 20040063136 | A | 12-07-2004 |
| | | | US | 2003125410 | A1 | 03-07-2003 |
| | | | WO | 03040205 | A1 | 15-05-2003 |
| EP 3992224 | A1 | 04-05-2022 | CN | 114008098 | A | 01-02-2022 |
| | | | EP | 3992224 | A1 | 04-05-2022 |
| | | | JP | 2021006601 | A | 21-01-2021 |
| | | | US | 2022120936 | A1 | 21-04-2022 |
| | | | WO | 2020262659 | A1 | 30-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0026272 A
- US 2003125410 A
- US 2007098999 A
- WO 2021182526 A
- EP 3916470 A
- EP 3919967 A
- WO 9837115 A
- WO 2014133111 A
- EP 1877839 A
- EP 394495 A
- US 4775733 A
- US 4689387 A
- US 5059673 A
- US 5087758 A
- US 5191055 A
- US 5908876 A
- WO 2017137372 A
- US 4975328 A
- EP 0271839 A
- US 5973098 A

### Non-patent literature cited in the description

- *CHEMICAL ABSTRACTS,* 3896-11-5
- *CHEMICAL ABSTRACTS,* 333-20-0
- *CHEMICAL ABSTRACTS,* 17455-13-9
- *CHEMICAL ABSTRACTS,* 60-24-2
- *CHEMICAL ABSTRACTS,* 3634-83-1
- *CHEMICAL ABSTRACTS,* 131538-00-6